# EUROPEAN PATENT SPECIFICATION

(11) **EP 3 801 357 B1**
(45) Date of publication and mention of the grant of the patent: **22.03.2023**
(21) Application number: 18922535.2
(22) Date of filing: 12.06.2018
(51) Int. Cl.: A61C 1/08

(54) **APPARATUS WITH SPRINGS AND HINGES FOR DETERMINING THE DIRECTION AND AXIS OF THE DENTAL IMPLANT DRILLING**
VORRICHTUNG MIT FEDERN UND SCHARNIEREN ZUR BESTIMMUNG DER RICHTUNG UND ACHSE EINER ZAHNIMPLANTATBOHRUNG
APPAREIL AVEC RESSORTS ET CHARNIÈRES POUR DÉTERMINER LA DIRECTION ET L'AXE DU FORAGE D'IMPLANT DENTAIRE

(30) Priority: 11.06.2018 TR 201808250
(43) Date of publication of application: 14.04.2021
(73) Proprietor: Azman, Veysel, 34520 Beylikduzu/Istanbul (TR)
(72) Inventor: Azman, Veysel, 34520 Beylikduzu/Istanbul (TR)
(74) Representative: Maikowski & Ninnemann Patentanwälte Partnerschaft mbB
(86) International application number: PCT/TR2018/050306
(87) International publication number: WO 2019/240691

(56) References cited:
- WO-A1-2012/099102
- WO-A1-2014/108908
- WO-A1-2016/153443
- WO-A1-2016/153443
- DE-A1- 10 036 027
- IT-A1- UB20 155 061
- US-A1- 2014 154 638
- US-A1- 2016 317 247

## Description

### Technical Field

This invention relates to an apparatus with springs and hinges for determining the direction and axis of the dental implant drilling.

### Prior Art

Determination of the drilling direction and axis during the insertion of the dental implants inside the bone tissue formed under the extracted teeth, constitute a technical problem.

There are several techniques used at present to solve this problem. The first and common solution is cutting and opening the gum at the top in the region to which the implant will be applied and reaching the bone tissue, then determining the drilling direction and axis. Since this method comprises the incision (cut) process, this application brings an additional recovery time during the treatment and gives inconvenience to the patient.

Furthermore, a dental implant technique with a computer aided imaging is also used today. In this technique, firstly, 3 dimensional image of the existing teeth in the mouth and the surrounding structure in the form of radiographical representation is taken, then 3 dimensional model image is created by means of the computer software, the dental implant drilling points and angles are determined on the computer screen, by using this information, the holes serving as a guide for drilling is processed on a physical mold and a guiding mold for drilling is created. As an example for this method, US Patent No. 5,725,376 titled "Methods for manufacturing a dental implant drill guide and a dental implant superstructure" may be given.

Also, there are some techniques for determining the implant axis by using computer aided imaging techniques without creating a guiding mold which has holes on it. For example, US Patent No 6,966,772 titled "Method of adjusting a drill bushing for a dental implant" discloses a method for finding the suitable angle for the drilling guide bushing by using tomography and computer aided imaging.

Furthermore, guiding structures in the form of adjacent double or triple teeth which have channels inside serving as a guide for drilling are known from US Patent No 5,636,986 titled "Drill guide for dental implants and method".

Finally, we would like to make a comparison with the patent document WO/2016/153443 titled as "A novel apparatus for determining the direction and axis of the dental implant drilling" which belongs to the owner of the present invention. The owner of this patent is identical to the owner of the invention described in the present description. The inventor has seen several disadvantages and implementation difficulties in the practice of the invention described in the prior patent specification, and has gone through significant developments in the invention and has developed a completely different product. In the previous system, elastic layers and magnets were used. It has been found that the elastic layers do not fit to the outer curvatures as well as desired while sitting on the gum, thus causing a fault in the determination of the axis of the drilling bit channel. Instead, the hinge system has been introduced to achieve a better fit to the surface curvatures. Besides, the use of the spring system to push down the metal needles in the present invention has brought great ease of use. Furthermore, the use of small fixing pins under the supporting unit ensures that the supporting unit is better fixed at the dental crest. While rubber string was used to provide movement in the prior application, in the present invention, it has been discovered that using of fishing line has significant advantages.

Computerized methods mentioned above are not generally preferred by dentists, since they are so expensive and they include a time consuming process of preparing a guiding mold.

IT UB2015 5061 A1 discloses an apparatus for determining the direction and axis of the dental implant drilling, but does not disclose at least any spring as defined in claim 1 of the present invention.

Due to the disadvantages of existing methods, the need for a novel apparatus that is both easy to use, practical, not expensive, and that does not require opening of gum by cutting, for finding the implant axis is satisfied by this invention.

### Summary of The Invention

This invention relates to an apparatus for determining the direction and axis of the dental implant drilling. Said apparatus comprises the following: a drilling bit channel, supporting unit, pivot bar, four needle pressing units, four metal needles, four hinges, right string and left string.

### Description of Figures

Figure 1 gives a front view of the apparatus according to the present invention,
Figure 2 gives a bottom perspective view of the apparatus according to the present invention,
Figure 3 gives a front view of the apparatus according to the present invention without the front panel of the supporting unit,
Figure 4 gives a front cross-sectional view of the apparatus according to the present invention,
Figures 5a, 5b, 5c, illustrate the pressing down motion of the head and the spring in the needle pressing unit,
Figure 5d shows the parts of the needle pressing unit,
Figure 6 shows a plan of placement of the apparatus according to the present invention on the empty place in the area of implant,
Figure 7 shows the inclination of the drilling bit channel with respect to the distance between the gum layer and bone layer,
Figure 8 gives a top view of the supporting unit and the drilling bit channel.

### References

- 1: Drilling bit channel
- 2: Supporting unit
- 2a: Front panel
- 2b: Back panel
- 3: Pivot bar
- 4: Bottom hole
- 5: Bottom opening of drilling bit channel
- 6: Fixing pin
- 7: Connection element
- 8: Hole for rotation
- 9: Needle pressing unit
- 10: Head
- 11: Metal needle
- 12: Spring
- 13: Spring housing
- 14: Spring protrusion
- 15a: Right string
- 15b: Left string
- 16: String hole
- 17: Vertical motion channel
- 18: Locking protrusion
- 19: Cylindrical sleeve
- 20: Pinhole
- 21: Hinge
- 22: String hook
- 23: Dental crest
- 24: Gum layer
- 25: Bone layer

### Detailed Description Of The Invention

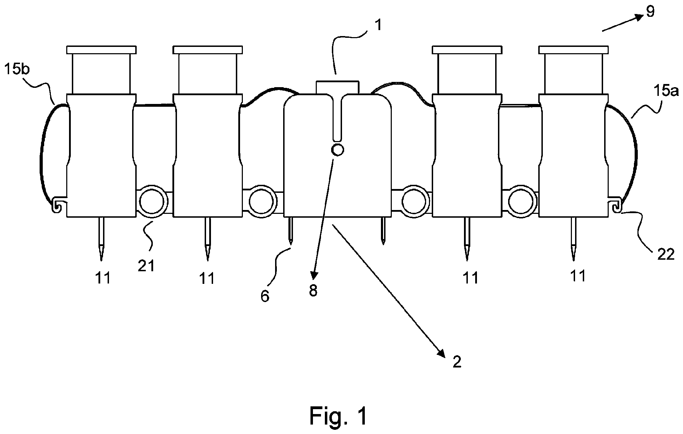

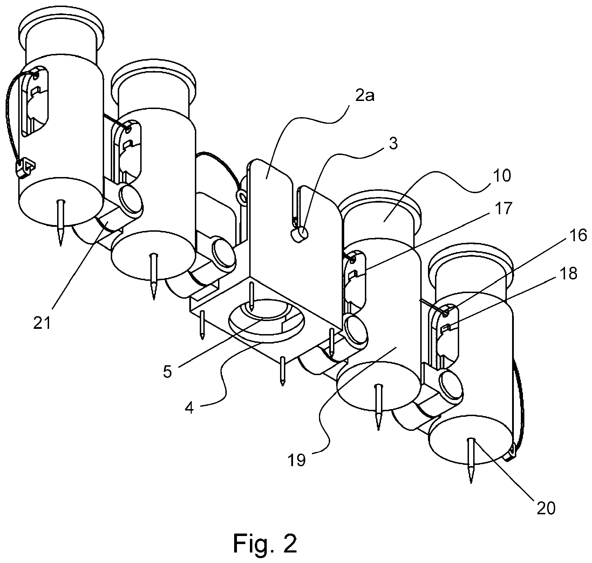

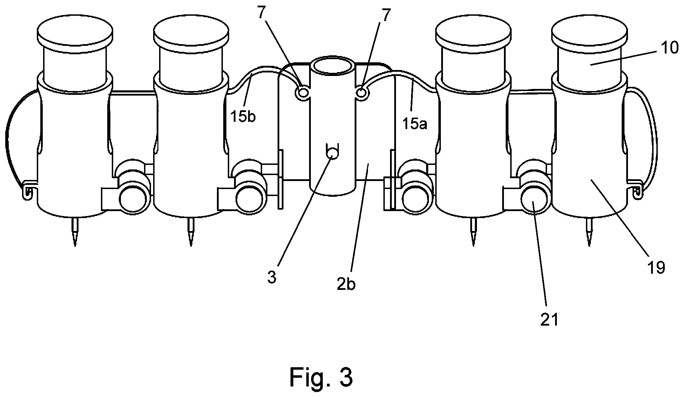

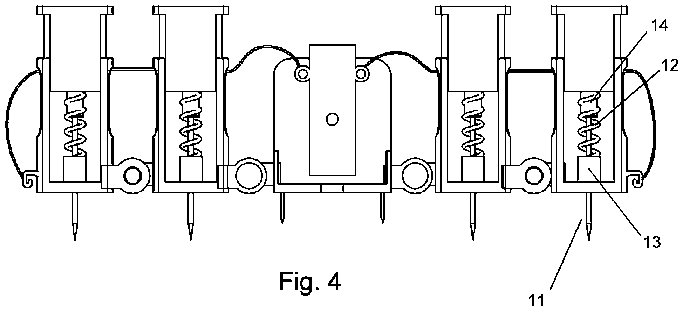

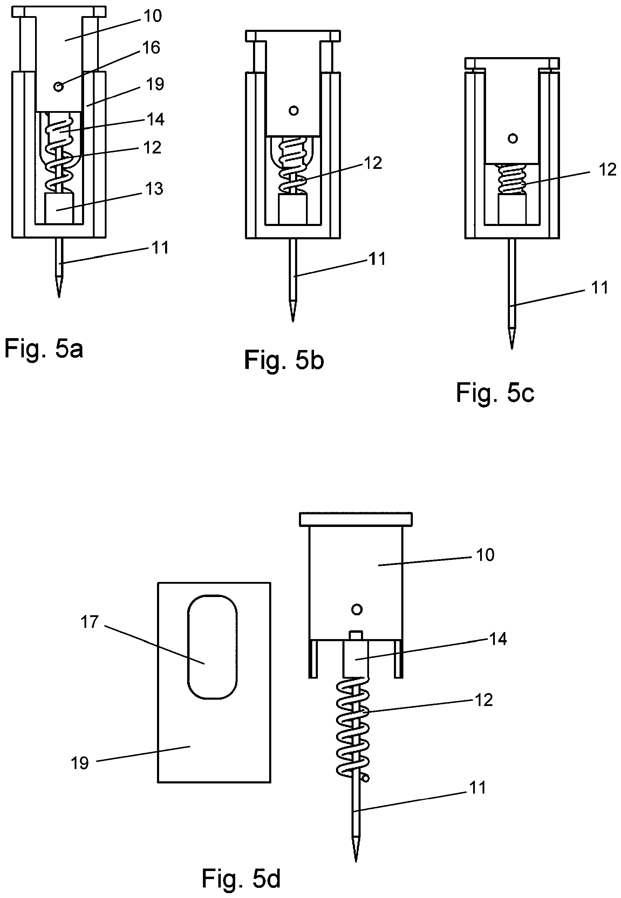

With the present invention, an apparatus for determining the direction and axis of the dental implant drilling is provided. As seen in Figures 1 to 7, the apparatus according to the invention comprises: a **drilling bit channel (1)** in the form of thin pipe, which can move right and left by means of the right string (15a) and the left string (15b), so as to determine the axis of the bone layer (25) and therefore the implant access path, a **supporting unit (2)** which consists of a front panel (2a), back panel (2b), bottom hole (4), four fixing pins (6) on the lower base and hole for rotation (8), and which is positioned on the dental crest (23) of the gum layer (24) in the area to be implanted, a **pivot bar (3)** for connecting the drilling bit channel (1) to the supporting unit (2) and thus allowing the right and left movement of the drilling bit channel (1), which is seated in the hole for rotation (8) and which is in the form a short rod in front of and behind the drilling bit channel (1), four **needle pressing units (9)** which are positioned to the right and left of the supporting unit (2) and which consist of a head (10), a spring (12) mounted on the spring protrusion (14) at the top and on the spring housing (13) at the bottom, string hole (16), vertical motion channel (17), cylindrical sleeve (19) and pinhole (20), **four metal needles (11),** which are fixed to the spring protrusion (14) under the head (10) of the needle pressing unit (9), and which pierce the gum layer (24) and bear on the bone layer (25) by pressing the head (10) from above and thus stretch the right and left strings (15a, 15b) and allow the right and left movement of the drilling bit channel (1) for determining the axis of bone layer (25), **four hinges (21),** which enable the rotary connection between the needle pressing units (9) and between the needle pressing unit (9) and the supporting unit (2) and which allow the apparatus to assume an arc shape when the apparatus is positioned on the gum layer (24), **right string (15a)** and **left string (15b)** which provide the right and left movement of the drilling bit channel (1).

In the apparatus according to claim 1, said right and left strings (15a, 15b), are connected at one end to a string hook (22) at the lower side of the cylindrical sleeve (19) and connected at the other end to a connection element (7) in the form of a ring which is connected to the lateral face of the drilling bit channel (1) which has a shape of hollow cylinder.

Furthermore, the diameter of bottom opening of drilling bit channel (5) is smaller than the diameter of the bottom hole (4) of the supporting unit (2) for enabling the drilling bit to pass out after the drilling bit channel (1) has been moved to the right or to the left. Besides the head (10) of the needle pressing unit (9) has a locking protrusion (18) which prevents the head (10) coming out from the cylindrical sleeve (19) into which the head (10) enters.

In the apparatus according to the invention, said metal needles (11) and fixing pins (6) are preferably made of titanium. However, they can also be produced from other medically suitable metals. Furthermore, said right and left strings (15a, 15b), are preferably fishing line which is resistant to breakage during stretching. As another feature, right string (15a) and left string (15b) are of the same length. Thus, when the apparatus according to the invention is positioned in the form of an arc on the area to be implanted, according to the size of the curvatures on the right and left sides, the drilling bit channel (1) is tilted to the right or to the left. If the curvatures on both sides stretch the right and left strings (15a, 15b) equally, then the drilling bit channel (1) is positioned in the fully upright position.

### Implementation of the system:

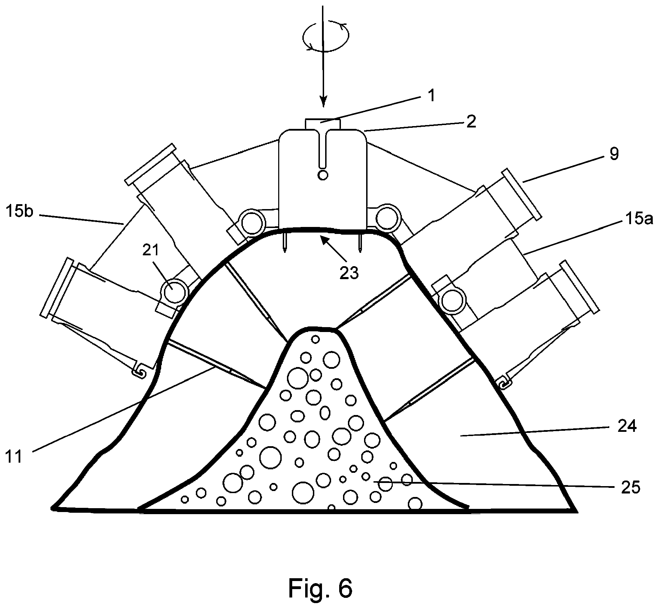

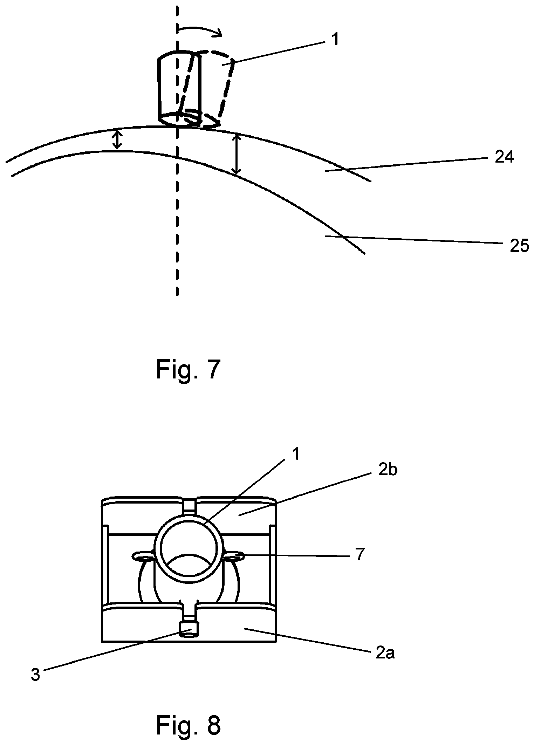

As seen in Fig. 6, drilling bit channel (1) and supporting unit (2) are placed on the dental crest (23) which is the top of gum layer (24), in the region to be implanted. The four fixing pins (6) under the supporting unit (2) provide fixing by piercing the gum layer (24). Then, the two needle pressing units (9) on the left and the two needle pressing units (9) on the right are pressed in such a way as to form an arc. During this pressing motion, every spring (12) in each needle pressing unit (9) is compressed and the four metal needles (11) pierce the gum layer (24) and bears on the bone layer (25). Then, while the head (10) moves down, right and left strings (15a, 15b) passing through the string hole (16) on the head (10) are stretched according to the outer curvatures of the right and left sides of the bone layer (25). If the right string (15a) is stretched more than the left string (15b), then the drilling bit channel (1) will be tilted to the right. Likewise, if the left string (15b) is stretched more than the right string (15a), then the drilling bit channel (1) will be tilted to the left. This is illustrated in Fig.7. The distance of the outer surface of the gum layer (24) to the outer surface of bone layer (25) indicates how far the metal needle (11) can be inserted. The more the metal needle 11 is inserted, the more it stretches the right or left string (5a, 5b) on the upper side. The dentist knows that, when all the metal needles (11) bear on the surface of the bone layer (25), the drilling bit channel (1) is appropriately tilted according to the correct axis of the bone layer (25) and he completes the drilling operation using the desired drilling bit.

In summary, since the metal needles (11), which are preferably made of titanium, will contact to the bone layer (25) at some regions closer to the surface and at some regions deeper from the surface, as seen in Fig. 6 and Fig. 7, right and left strings (15a, 15b) connected to the drilling bit channel (1) will create tension relative to the position of the metal needles (11) and provide the right and left movement of the drilling bit channel (1). When all the parts in the system works with coordination, the final position of the drilling bit channel (1) is determined and thus the direction of application and axis of the drilling bit is found. This axis will be the true axis of the implant which is decided to be inserted.

## Claims

1. An apparatus for determining the direction and axis of the dental implant drilling, **characterized in that** it comprises
- a **drilling bit channel (1)** in the form of thin pipe, which can move right and left by means of the right string (15a) and the left string (15b), so as to determine the axis of the bone layer (25) and therefore the implant access path,
- a **supporting unit (2)** which consists of a front panel (2a), back panel (2b), bottom hole (4), four fixing pins (6) on the lower base and hole for rotation (8), and which is positioned on the dental crest (23) of the gum layer (24) in the area to be implanted,
- a **pivot bar (3)** for connecting the drilling bit channel (1) to the supporting unit (2) and thus allowing the right and left movement of the drilling bit channel (1), which is seated in the hole for rotation (8) and which is in the form a short rod in front of and behind the drilling bit channel (1),
- four **needle pressing units (9)** which are positioned to the right and left of the supporting unit (2) and which consist of a head (10), a spring (12) mounted on the spring protrusion (14) at the top and on the spring housing (13) at the bottom, string hole (16), vertical motion channel (17), cylindrical sleeve (19) and pinhole (20),
- **four metal needles (11),** which are fixed to the spring protrusion (14) under the head (10) of the needle pressing unit (9), and which pierce the gum layer (24) and bear on the bone layer (25) by pressing the head (10) from above and thus stretch the right and left strings (15a, 15b) and allow the right and left movement of the drilling bit channel (1) for determining the axis of bone layer (25),
- **four hinges (21),** which enable the rotary connection between the needle pressing units (9) and between the needle pressing unit (9) and the supporting unit (2) and which allow the apparatus to assume an arc shape when the apparatus is positioned on the gum layer (24),
- **right string (15a)** and **left string (15b)** which provide the right and left movement of the drilling bit channel (1).

2. An apparatus according to claim 1, **characterized in that** said right and left strings (15a, 15b), are connected at one end to a string hook (22) at the lower side of the cylindrical sleeve (19) and connected at the other end to a connection element (7) in the form of a ring which is connected to the lateral face of the drilling bit channel (1) which has a shape of hollow cylinder.

3. An apparatus according to Claims 1 to 2, **characterized in that** the diameter of bottom opening of drilling bit channel (5) is smaller than the diameter of the bottom hole (4) of the supporting unit (2) for enabling the drilling bit to pass out after the drilling bit channel (1) has been moved to the right or to the left.

4. An apparatus according to Claims 1 to 3, **characterized in that** the head (10) of the needle pressing unit (9) has a locking protrusion (18) which prevents the head (10) coming out from the cylindrical sleeve (19) into which the head (10) enters.

5. An apparatus according to Claims 1 to 4, **characterized in that** said metal needles (11) and fixing pins (6) are preferably made of titanium.

6. An apparatus according to Claims 1 to 5, **characterized in that** said right and left strings (15a, 15b), are preferably fishing line which is resistant to breakage during stretching.

7. An apparatus according to Claims 1 to 6, **characterized in that** right string (15a) and left string (15b) are of the same length.

## Patentansprüche

1. Vorrichtung zur Bestimmung der Richtung und Achse der Zahnimplantatbohrung, **dadurch gekennzeichnet, dass** sie Folgendes umfasst:
- einen Bohrmeißelkanal (1) in Form eines dünnen Rohres, das sich mit Hilfe der rechten Schnur (15a) und der linken Schnur (15b) nach rechts und links bewegen kann, um die Achse der Knochenschicht (25) und damit den Zugangsweg zum Implantat zu bestimmen,
- eine Stützeinheit (2), die aus einer vorderen Platte (2a), einer hinteren Platte (2b), einem Bodenloch (4), vier Befestigungsstiften (6) an der unteren Basis und einem Drehloch (8) besteht und die auf dem Zahnkamm (23) der Zahnfleischschicht (24) in dem zu implantierenden Bereich positioniert wird,
- eine Schwenkstange (3) zum Verbinden des Bohrmeißelkanals (1) mit der Stützeinheit (2) und somit zum Erlauben der Rechts- und Linksbewegung des Bohrmeißelkanals (1), der in dem Drehloch (8) sitzt und der in Form einer kurzen Stange vor und hinter dem Bohrmeißelkanal (1) vorliegt,
- vier Nadelpresseinheiten (9), die rechts und links von der Stützeinheit (2) positioniert sind und die aus einem Kopf (10), einer Feder (12), die oben auf dem Federvorsprung (14) und unten auf dem Federgehäuse (13) gelagert ist, einem Schnurloch (16), einem vertikalen Bewegungskanal (17), einer zylindrischen Hülse (19) und einem Nadelloch (20) bestehen,
- vier Metallnadeln (11), die an dem Federvorsprung (14) unter dem Kopf (10) der Nadelpresseinheit (9) befestigt sind und die die Zahnfleischschicht (24) durchbohren und auf der Knochenschicht (25) aufliegen, indem sie von oben auf den Kopf (10) drücken und somit die rechte und linke Schnur (15a, 15b) spannen und die Rechts- und Linksbewegung des Bohrmeißelkanals (1) zur Bestimmung der Achse der Knochenschicht (25) erlauben,
- vier Scharniere (21), die die Drehverbindung zwischen den Nadelpresseinheiten (9) und zwischen der Nadelpresseinheit (9) und der Stützeinheit (2) ermöglichen und die es der Vorrichtung erlauben, eine Bogenform anzunehmen, wenn die Vorrichtung auf der Zahnfleischschicht (24) positioniert wird,
- eine rechte Schnur (15a) und eine linke Schnur (15b), die für die Rechts- und Linksbewegung des Bohrmeißelkanals (1) sorgen.

2. Vorrichtung nach Anspruch 1, **dadurch gekennzeichnet, dass** die rechte und die linke Schnur (15a, 15b) an einem Ende mit einem Schnurhaken (22) an der Unterseite der zylindrischen Hülse (19) verbunden sind und am anderen Ende mit einem Verbindungselement (7) in Form eines Rings verbunden sind, der mit der Seitenfläche des Bohrmeißelkanals (1) verbunden ist, der die Form eines Hohlzylinders hat.

3. Vorrichtung nach den Ansprüchen 1 bis 2, **dadurch gekennzeichnet, dass** der Durchmesser der Bodenöffnung des Bohrmeißelkanals (5) kleiner ist als der Durchmesser des Bodenlochs (4) der Stützeinheit (2), um den Austritt des Bohrmeißels zu ermöglichen, nachdem der Bohrmeißelkanal (1) nach rechts oder nach links bewegt wurde.

4. Vorrichtung nach den Ansprüchen 1 bis 3, **dadurch gekennzeichnet, dass** der Kopf (10) der Nadelpresseinheit (9) einen Verriegelungsvorsprung (18) besitzt, der verhindert, dass der Kopf (10) aus der zylindrischen Hülse (19), in die der Kopf (10) eintritt, herauskommt.

5. Vorrichtung nach den Ansprüchen 1 bis 4, **dadurch gekennzeichnet, dass** die Metallnadeln (11) und die Befestigungsstifte (6) vorzugsweise aus Titan hergestellt sind.

6. Vorrichtung nach den Ansprüchen 1 bis 5, **dadurch gekennzeichnet, dass** es sich bei der rechten und der linken Schnur (15a, 15b) vorzugsweise um eine Angelschnur handelt, die beim Dehnen reißfest ist.

7. Vorrichtung nach den Ansprüchen 1 bis 6, **dadurch gekennzeichnet, dass** die rechte Schnur (15a) und die linke Schnur (15b) gleich lang sind.

## Revendications

1. Appareil pour déterminer la direction et l'axe du forage de l'implant dentaire, **caractérisé en ce qu'**il comprend
- un canal de trépan (1) sous forme de tube mince, qui peut se déplacer vers la droite et vers la gauche au moyen de la corde droite (15a) et la corde gauche (15b), de manière à déterminer l'axe de la couche osseuse (25) et donc le chemin d'accès à l'implant,
- une unité de support (2) qui consiste en un panneau avant (2a), un panneau arrière (2b), un trou inférieur (4), quatre broches de fixation (6) sur la base inférieure et un trou de rotation (8), et qui est positionnée sur la crête dentaire (23) de la couche de gencive (24) dans la zone à implanter,
- une barre de pivotement (3) pour relier le canal de trépan (1) à l'unité de support (2) et permettre ainsi le déplacement vers la droite et vers la gauche du canal de trépan (1), qui est logé dans le trou de rotation (8) et qui se présente sous forme d'une courte tige devant et derrière le canal de trépan (1),
- quatre unités de pressage d'aiguilles (9) qui sont positionnées à droite et à gauche de l'unité de support (2) et qui se composent d'une tête (10), d'un ressort (12) monté sur la saillie de ressort (14) en haut et sur le logement de ressort (13) en bas, d'un trou de corde (16), d'un canal de mouvement vertical (17), d'un manchon cylindrique (19) et d'un trou d'épingle (20),
- quatre aiguilles métalliques (11), qui sont fixées à la saillie de ressort (14) sous la tête (10) de l'unité de pressage d'aiguilles (9), et qui percent la couche de gencive (24) et s'appuient sur la couche osseuse (25) en pressant la tête (10) par le haut et tendent ainsi les cordes droite et gauche (15a, 15b) et permettent le mouvement à droite et à gauche du canal de trépan (1) pour déterminer l'axe de la couche osseuse (25),
- quatre charnières (21), qui permettent la connexion rotative entre les unités de pressage d'aiguilles (9) et entre l'unité de pressage d'aiguilles (9) et l'unité de support (2) et qui permettent à l'appareil de prendre une forme d'arc lorsque l'appareil est positionné sur la couche de gencive (24),
- une corde droite (15a) et une corde gauche (15b) qui assurent le déplacement vers la droite et vers la gauche du canal du trépan (1).

2. Appareil selon la revendication 1, **caractérisé en ce que** lesdites cordes droite et gauche (15a, 15b) sont reliées à une extrémité à un crochet de corde (22) sur le côté inférieur du manchon cylindrique (19) et reliées à l'autre extrémité à un élément de connexion (7) sous forme d'un anneau qui est relié à la face latérale du canal du trépan (1) qui présente une forme de cylindre creux.

3. Appareil selon les revendications 1 à 2, **caractérisé en ce que** le diamètre de l'ouverture inférieure du canal de trépan (5) est plus petit que le diamètre du trou inférieur (4) de l'unité de support (2) pour permettre au trépan de sortir après que le canal de trépan (1) ait été déplacé vers la droite ou vers la gauche.

4. Appareil selon les revendications 1 à 3, **caractérisé en ce que** la tête (10) de l'unité de pressage d'aiguilles (9) présente une saillie de verrouillage (18) qui empêche la tête (10) de sortir du manchon cylindrique (19) dans lequel la tête (10) entre.

5. Appareil selon les revendications 1 à 4, **caractérisé en ce que** lesdites aiguilles métalliques (11) et broches de fixation (6) sont de préférence en titane.

6. Appareil selon les revendications 1 à 5, **caractérisé en ce que** lesdites cordes droite et gauche (15a, 15b) sont de préférence des lignes de pêche qui sont résistantes à la rupture pendant l'étirement.

7. Appareil selon les revendications 1 à 6, **caractérisé en ce que** la corde droite (15a) et la corde gauche (15b) sont de la même longueur.
